# EUROPÄISCHE PATENTANMELDUNG

(11) **EP 1 543 717 A1**
(43) Veröffentlichungstag der Anmeldung: **22.06.2005**
(21) Anmeldenummer: 04106305.8
(22) Anmeldetag: 06.12.2004
(51) Int. Cl.: A01F 12/34

(54) **Verschlusseinrichtung zum Verringern der Öffnungsgrösse von Belägen eines Strohschüttlers**

(30) Priorität: 18.12.2003 DE 10359397
(71) Anmelder: DEERE & COMPANY, Moline, Illinois 61265-8098 (US)
(72) Erfinder: Riedinger, Franz, 66424, Homburg-Einöd (DE)
(74) Vertreter: Holst, Sönke, Dr.

(57) **Zusammenfassung**

Die Erfindung bezieht sich auf eine Verschlusseinrichtung (60) zum selektiven Verringern der Öffnungsgröße von Belägen (48, 50) eines Strohschüttlers (30).

Es wird vorgeschlagen, dass die Verschlusseinrichtung (60) einen sich im Wesentlichen flächig erstreckenden Körper (60) aufweist, der an dem Belag (48, 50) des Strohschüttlers (30) lösbar fixierbar ist, wobei der Körper (60) derart geformt ist, dass er sich im angebrachten Zustand parallel zur Ebene des Belags (48, 50) erstreckt und eine oder mehrere Öffnungen (54) des Belags (48, 50) teilweise oder vollständig abdeckt.

## Beschreibung

Die Erfindung betrifft eine Verschlusseinrichtung zum Verringern der Öffnungsgröße von Belägen eines Strohschüttlers.

So genannte konventionelle Mähdrescher mit im Tangentialfluss arbeitenden Dreschtrommeln und nachgeordneten Strohschüttlern sind im Stand der Technik weit verbreitet. Im Erntegut enthaltene Körner werden durch die Dreschtrommel und einen zugeordneten Dreschkorb abgetrennt, während die Strohschüttler als Trenneinrichtung dienen, um nach dem Drusch noch in der Strohmatte verbliebene Körner herauszulösen. Die Strohschüttler setzen sich aus mit Öffnungen ausgestatteten Belägen und an ihren oberen Rändern mit Zacken ausgestatteten Seitenwänden zusammen. Die Beläge sind in der Regel in Stufen angeordnet.

Da die Mähdrescher in der Regel zur Ernte unterschiedlicher Erntegüter genutzt werden, ist die Dimensionierung der Öffnungen in den Belägen der Strohschüttler kritisch. Für die Ernte relativ kleiner Körner, wie Weizen, wären kleinere Öffnungen angebracht, als wenn Erntegut mit großen Körnern, wie Sojabohnen, Mais oder ein Mais-Kolben-Gemisch (Corn-Cob-Mix) geerntet wird.

Man wählt daher in der Regel eine relativ große Größe der Öffnungen, die beispielsweise für Mais-Kolben-Gemisch dimensioniert wird und sich für die gebräuchlichsten Erntegutarten eignet. Allerdings können derartige Beläge bei trockenen Bedingungen oder bei speziellen Erntegutarten verstopfen oder die Reinigung überlasten. Vorgeschlagen wurden auch Strohschüttler mit austauschbaren Belägen (US 3 435 953 A) und mit Belägen, die zwei übereinander angeordnete Schichten haben, die jeweils mit Öffnungen ausgestattet und gegeneinander zur Einstellung der Öffnungsweite verstellbar sind (DE 1 171 196 C). Der Austausch der Beläge ist jedoch zeitaufwändig und erfordert einen hohen Herstellungsaufwand, was auch bei den verstellbaren Belägen der Fall ist.

Die US 5 582 545 A schlägt sägezahnförmige Einheiten vor, die in geeignete Öffnungen in den Belägen eingesetzt werden können. Die Einheiten erstrecken sich von den Belägen in Längsrichtung der Strohschüttler und nach oben. Sie dienen dazu, Halme oder Stroh aggressiver entlang der Strohschüttler zu transportieren. Da die Einheiten nur einen geringen Anteil der Öffnungsfläche der Löcher verschließen, ermöglichen sie keine nennenswerte Anpassung der Öffnungsgröße der Beläge an Erntegutarten mit unterschiedlich großen Körnern.

Die der Erfindung zu Grunde liegende Aufgabe wird darin gesehen, einfache und preiswerte Mittel bereitzustellen, mit denen die Öffnungsgröße der Beläge ohne großen Aufwand an die jeweilige Erntegutart anpassbar ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Verschlusseinrichtung vorgeschlagen, die lösbar an den Belägen des Strohschüttlers anbringbar ist. Die Verschlusseinrichtung umfasst einen Körper, der sich im angebrachten Zustand parallel zur Ebene des Belags erstreckt. Der Körper verschließt eine oder mehrere Öffnungen des Belags teilweise oder vollständig.

Auf diese Weise wird durch die Verschlusseinrichtung die Öffnungsgröße der Öffnungen des Belags vermindert, ohne dass die Beläge auszutauschen oder verstellbar zu gestalten wären. Soll der Mähdrescher in trockenen Bedingungen arbeiten oder zur Ernte von Erntegutarten eingesetzt werden, für die die vorhandenen Öffnungen des Belags zu groß sind, kann einfach und schnell die Verschlusseinrichtung angebracht werden. Wird sie nicht mehr benötigt, kann sie wieder abgenommen werden.

Die Fixierung der Verschlusseinrichtung kann auf beliebige Art erfolgen. So könnte sie unter- oder oberhalb des Belags durch eine Schraubverbindung angebracht werden. Um die Montage- und Demontagezeit klein zu halten, ist jedoch eine Einclip-Verbindung bevorzugt, die eine vom Körper der Verschlusseinrichtung überstehende Nase umfasst, die den Rand einer Öffnung des Belags zwischen sich und dem Körper einschließt. Die Nase kann in sich flexibel oder federnd gestaltet werden, um ein Einrasten zu ermöglichen. An einer anderen Stelle des Körpers, vorzugsweise dem von der Nase beabstandeten Ende, kann ein Haken vorgesehen sein, der einen Steg untergreift, der vom Belag hochsteht. Abhängig von der Form des Belags sind auch andere Fixierungsmöglichkeiten der Verschlusseinrichtung denkbar. Bei flachen Belägen könnten beispielsweise zwei Nasen vorgesehen sein, die an gegenüberliegenden Rändern einer Öffnung des Belags angreifen.

Die Verschlusseinrichtung erstreckt sich vorzugsweise über die Breite des Belags, um in einer Öffnungsreihe alle seitlich nebeneinander angeordneten Öffnungen im Belag abdecken zu können. In der Längsrichtung des Belags, d. h. der Flussrichtung des Ernteguts über den Strohschüttler, kann die Verschlusseinrichtung in einer Ausführungsform nur eine Querreihe abdecken. Dann sind an einem Belag mehrere Verschlusseinrichtungen anzubringen, um die Öffnungsgröße mehrerer oder aller Querreihen zu vermindern. Bei einer anderen Ausführungsform überdeckt die Verschlusseinrichtung mehrere oder alle Querreihen des Belags einer Schüttlerstufe.

Die Verschlusseinrichtung kann in einer einfachen Ausführungsform ein geschlossenes Element ohne Öffnungen sein, das eine oder mehrere Öffnungen des Belags teilweise oder vollständig verschließt. Die effektive Anzahl der Öffnungen des Belags bleibt somit konstant oder wird reduziert. Es kann aber auch sinnvoll sein, die Öffnungen des Belags in mehrere kleinere Öffnungen zu unterteilen, d. h. ihre Anzahl zu vergrößern, aber die jeweilige Fläche zu verkleinern, was durch einen Steg des Körpers erfolgen kann, an dessen Seiten sich jeweils eine Öffnung befindet. Die Öffnungen des Körpers überdecken jeweils eine Öffnung des Belags. Der Steg erstreckt sich vorzugsweise in der Längsrichtung des Belags, d. h. der Flussrichtung des Ernteguts. Die Breite der Öffnungen des Belags wird somit vermindert. Ihre effektive Länge kann durch geeignete Wahl der Länge der Öffnungen des Körpers vermindert oder gleich gelassen werden.

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem Strohschüttler,
- Fig. 2: eine perspektivische Ansicht des Strohschüttlers,
- Fig. 3: eine perspektivische Ansicht einer ersten Ausführungsform eines Belags des Strohschüttlers aus Figur 2,
- Fig. 4: eine perspektivische Ansicht einer zweiten Ausführungsform eines Belags des Strohschüttlers aus Figur 2,
- Fig. 5: eine Draufsicht auf eine erfindungsgemäße Verschlusseinrichtung,
- Fig. 6: einen Querschnitt durch die Verschlusseinrichtung aus Figur 5, und
- Fig. 7: einen Längsschnitt durch einen Belag und die daran befestigte Verschlusseinrichtung aus Figur 5.

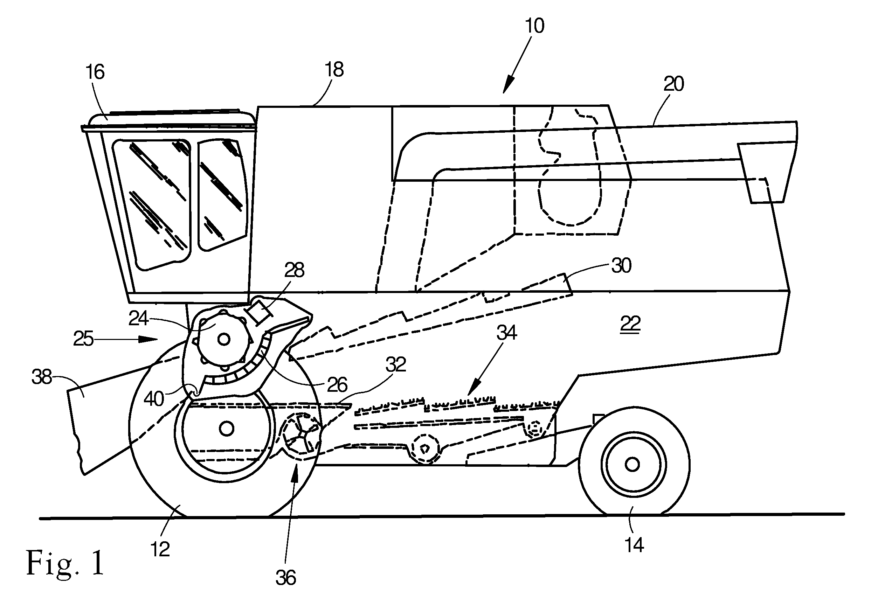

Ein in der Figur 1 gezeigter Mähdrescher 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Strohschüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Strohschüttler 30 direkt oder einen nicht eingezeichneten Strohhäcksler auf das Feld ausgeworfen werden und leichte Bestandteile mittels eines Gebläses 36 von den Sieben 34 - ggf. über zusätzliche Kaffstreuer oder durch den Strohhäcksler - ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Bei dem Mähdrescher 10 in der Figur 1 handelt es sich somit um einen so genannten konventionellen Mähdrescher mit im Tangentialfluss arbeitender Dreschtrommel 24 und nachgeordneten Strohschüttlern 30. Die Strohschüttler 30 dienen zum Ausscheiden von Korn, das nach dem Drusch noch in der Gutmatte verblieben ist. Das von den Strohschüttlern 30 herausgelöste Korn wird über den Vorbereitungsboden 32 den Sieben 34 zugeführt. Das Dreschwerk kann, wie in der Figur 1 dargestellt, aus einer einzigen Dreschtrommel, oder alternativ dazu mehreren aufeinander folgenden Dresch- und Abscheidetrommeln aufgebaut sein.

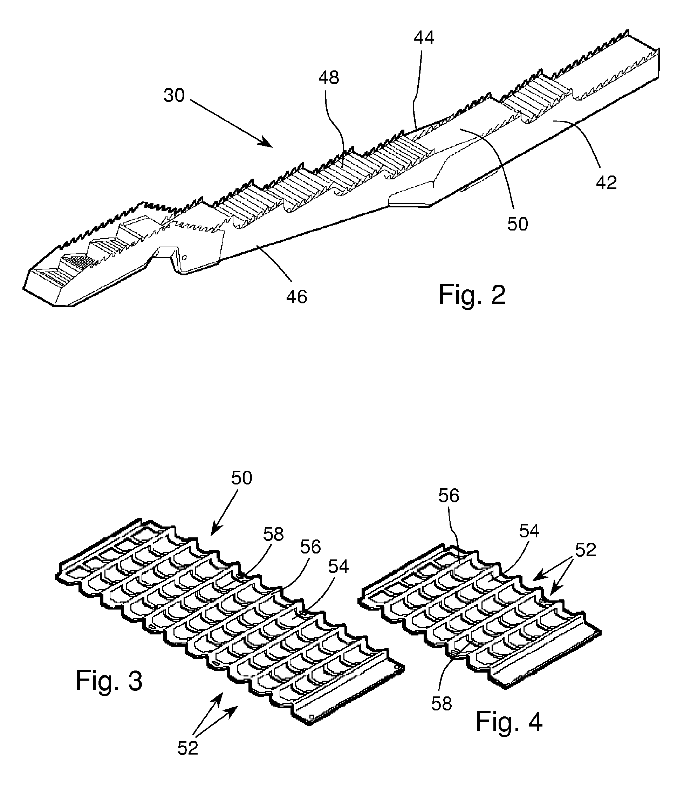

Es sind mehrere Strohschüttler 30 seitlich nebeneinandergeordnet, in der Regel fünf oder sechs. Sie werden durch Exzenterwellen jeweils phasenverschoben angetrieben und führen eine Hin- und Herbewegung mit einer vertikalen Komponente durch, um die Strohmatte zu fördern, aufzulockern und die Körner abzuscheiden. Ein einzelner Strohschüttler 30 ist in der Figur 2 dargestellt. Er setzt sich aus linken und rechten Seitenwänden 42, 44, einer Bodenwanne 46 und Belägen 48, 50 zusammen. Die Seitenwände 42, 44 sind durch die an ihrer Unterseite angeordnete Bodenwanne 46 miteinander verbunden. Die Bodenwanne 46 führt abgeschiedene Körner dem Vorbereitungsboden 32 zu, wie anhand der Figur 1 erkennbar. In der Nähe des oberen Rands der Seitenwände 42, 44 sind die Beläge 48, 50 befestigt. Sie können mit den Seitenwänden 42, 44 verschraubt oder verschweißt oder auf beliebige andere Weise verbunden sein. Der Strohschüttler 30 umfasst mehrere in seiner Längsrichtung hintereinander angeordnete Beläge, zwischen denen jeweils kürzere oder längere Stufen gebildet sind. An den längeren Stufen sind längere Beläge 50 (Figur 3) und an den kürzeren Stufen sind kürzere Beläge 48 (Figur 4) angebracht. Die Seitenwände 42, 44 enden jeweils in relativ geringem Abstand oberhalb der Beläge 48, 50, sind oberseitig mit Zacken versehen und bilden analog den Belägen 48, 50 aufeinander folgende Stufen. Der Aufbau und die Funktion derartiger Strohschüttler 30 ist im Stand der Technik hinreichend bekannt, so dass sich eine detailliertere Beschreibung erübrigt.

Die Figuren 3 und 4 zeigen die Beläge 48 bzw. 50 detaillierter. Die Beläge 48, 50 bestehen aus gestanztem und gebogenem Material, insbesondere Stahl oder Eisen. Sie sind in der Regel lackiert. Jeder der Beläge 48, 50 weist eine Anzahl in Längsrichtung des Strohschüttlers hintereinander angeordneter Öffnungsreihen 52 auf, die jeweils fünf nebeneinander angeordnete Öffnungen 54 umfassen. Die Öffnungen 54 sind rechteckig und weisen eine Fläche von beispielsweise 4 mal 4 cm² auf. Zwischen den Öffnungsreihen 52 bilden die Beläge bogenförmig nach oben gewölbte Stege 56. Die zwischen den Öffnungen 54 der Öffnungsreihen 52 verbleibenden, sich in Längsrichtung erstreckenden Stege 58 sind nach unten gekrümmt. Diese Form der Beläge 48, 50 ist an sich bekannt und gebräuchlich. Sie eignet sich insbesondere zur Ernte von Erntegutarten mit relativ großen Körnern.

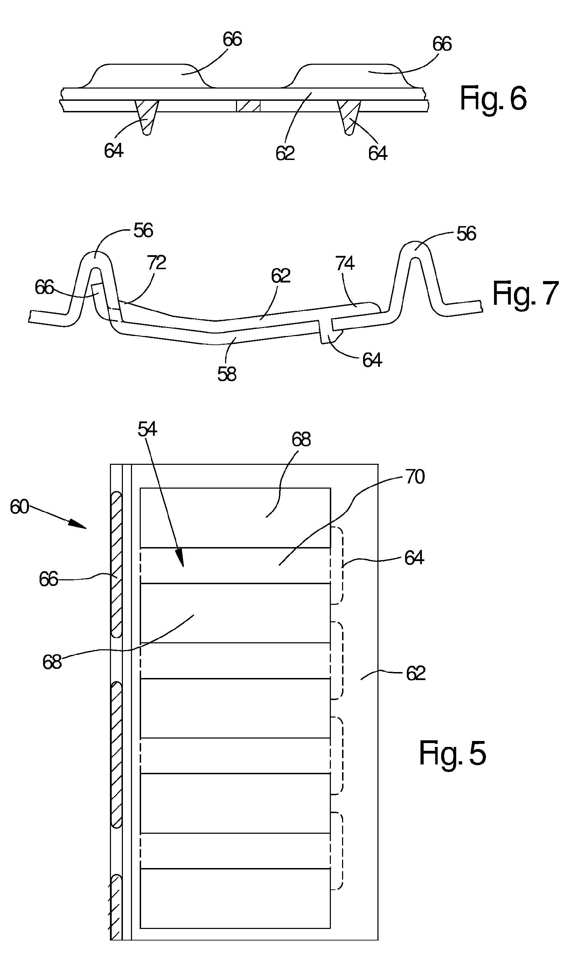

Die Figuren 5 bis 7 stellen eine erfindungsgemäße Verschlusseinrichtung 60 dar, die sich zum teilweisen Verschließen der Öffnungen 54 eignet. Die Verschlusseinrichtung 60 setzt sich aus einem Körper 62 und mit dem Körper 62 einteilig geformten Nasen 64 und Haken 66 zusammen. Die Verschlusseinrichtung 60 besteht vorzugsweise aus gegossenem oder gespritztem Kunststoff. Der Körper 62 ist flach geformt. Seine Breite (die sich in Figur 5 von oben nach unten erstreckt) entspricht der Breite der Beläge 48, 50. Seine Länge (in Figur 5 von links nach rechts) entspricht der Länge einer Öffnungsreihe 52 in der Längsrichtung des Strohschüttlers 30. Der Körper 62 ist somit rechteckig und seine Dicke ist wesentlich kleiner als seine Länge und Breite. Der Körper 62 ist mit rechteckigen Öffnungen 68 ausgestattet, die jeweils paarweise oberhalb einer Öffnung 54 des Belags 48, 50 angeordnet sind. Ein zwischen den Öffnungen 68 verbleibender, sich in Längsrichtung erstreckender Längssteg 70 deckt den mittleren Bereich der in Figur 5 gestrichelt eingezeichneten Öffnung 54 des Belags 48, 50 ab. Dadurch wird die Öffnung 54 effektiv in zwei bezüglich der Flussrichtung des Ernteguts nebeneinander liegende, kleinere Öffnungen 68 unterteilt.

Durch Anbringen der Verschlusseinrichtung 60 kann der Strohschüttler 30 an Erntebedingungen angepasst werden, bei denen die Öffnungen 54 sich als zu groß erweisen.

Die Befestigung der Verschlusseinrichtung 60 am Belag 48, 50 ist anhand der Figur 7 erkennbar. Der sich nach oben erstreckende Haken 66 wird unterhalb des bogenförmig nach oben gewölbten Stegs 56 des Belags 48, 50 positioniert. Dabei kommt ein nach oben stehender Vorsprung 72 des Körpers 62 an der stromab liegenden Flanke des Stegs 56 zum Anliegen. Dann wird der Körper 62 nach unten verschwenkt, bis die federnd ausgebildeten, winkelförmigen Nasen 64 den Belag 48, 50 an dem rückwärtigen Rand der Öffnung 54 untergreifen. Da der Körper 62 einen oberhalb dieses Rands liegenden Bereich 74 aufweist und der Haken 66 unterhalb des Stegs 56 anliegt und auch mit dem Vorsprung 72 an der Oberseite des Belags 48, 50 anliegt, während sich der Haken 66 unterhalb des Stegs 56 befindet, ist dann keine Bewegung der Verschlusseinrichtung 60 in vertikaler Richtung relativ zum Belag 48, 50 mehr möglich. In der Längsrichtung des Strohschüttlers 30 ist die Verschlusseinrichtung 60 durch den Haken 66 und den Vorsprung 72 arretiert, während sie in der dazu orthogonalen, horizontalen Richtung durch die Nasen 64 arretiert ist, die am seitlichen Rand der Öffnungen 54 anliegen. Die Verschlusseinrichtung 60 kann somit einfach angeclipst werden. Sie kann auch leicht und zerstörungsfrei mittels eines Schraubendrehers, der zwischen den Körper 62 und den Belag 48, 50 gedrückt wird, wieder gelöst werden. Anhand der Figur 7 ist auch erkennbar, dass das Profil des Körpers 62 an die Form der Stege 58 des Belags 48, 50 angepasst ist; der Körper 62 ist somit geringförmig nach unten gewölbt.

In der dargestellten Ausführungsform ist eine Verschlusseinrichtung 60 jeweils einer Öffnungsreihe 52 zugeordnet. Es wäre aber auch denkbar, die Verschlusseinrichtung 60 in der Längsrichtung des Strohschüttlers 30 zu verlängern, so dass sie zwei, drei, oder mehrere bzw. alle Öffnungsreihen 52 eines Belags 48 bzw. 50 verschließen kann.

## Patentansprüche

1. Verschlusseinrichtung (60) zum Verringern der Öffnungsgröße von Belägen (48, 50) eines Strohschüttlers (30), **dadurch gekennzeichnet, dass** sie einen sich im Wesentlichen flächig erstreckenden Körper (60) aufweist, der an dem Belag (48, 50) des Strohschüttlers (30) lösbar fixierbar ist, wobei der Körper (60) derart geformt ist, dass er sich im angebrachten Zustand parallel zur Ebene des Belags (48, 50) erstreckt und eine oder mehrere Öffnungen (54) des Belags (48, 50) teilweise oder vollständig abdeckt.

2. Verschlusseinrichtung (60) nach Anspruch 1, **dadurch gekennzeichnet, dass** der Körper (62) als Mittel zum lösbaren Fixieren mit einer überstehenden Nase (64) ausgestattet ist, wobei im am Belag (48, 50) befestigten Zustand der Rand einer Öffnung (54) des Belags (48, 50) zwischen der Nase (64) und dem Körper (62) eingeklemmt ist.

3. Verschlusseinrichtung (60) nach Anspruch 1 oder 2, **dadurch gekennzeichnet, dass** der Körper (62) als Mittel zum lösbaren Fixieren mit einem Haken (66) versehen ist, der unterhalb eines nach oben gewölbten Stegs (56) des Belags (48, 50) anordenbar ist, wobei der Körper (60) von oben an einem Steg (58) des Belags (48, 50) aufliegt.

4. Verschlusseinrichtung (60) nach Anspruch 3, **dadurch gekennzeichnet, dass** die Nase (64) und der Haken (66) an gegenüberliegenden Seiten des Körpers (62) angeordnet sind.

5. Verschlusseinrichtung (60) nach einem der vorhergehenden Ansprüche, **dadurch gekennzeichnet, dass** sie sich über die Breite des Belags (48, 50) erstreckt.

6. Verschlusseinrichtung (60) nach einem der vorhergehenden Ansprüche, **dadurch gekennzeichnet, dass** sie sich in der Längsrichtung des Belags (48, 50) über eine Öffnungsreihe (52) oder mehrere Öffnungsreihen (52) des Belags (48, 50) einer Schüttlerstufe erstreckt.

7. Verschlusseinrichtung (60) nach einem der vorhergehenden Ansprüche, **dadurch gekennzeichnet, dass** der Körper (62) mehrere Öffnungen (68) aufweist, zwischen denen sich ein Steg (70) befindet, der eine Öffnung (54) des Belags (48, 50) überdeckt.

8. Verschlusseinrichtung (60) nach Anspruch 7, **dadurch gekennzeichnet, dass** der Steg (70) sich in der Längsrichtung des Belags (48, 50) erstreckt.

9. Verschlusseinrichtung (60) nach Anspruch 6 oder 7, **dadurch gekennzeichnet, dass** der Steg (70) an seinen beiden Seiten Öffnungen (68) hat, die eine einzige Öffnung (54) im Belag (48, 50) überdecken.

10. Strohschüttler (30) für einen Mähdrescher (10), mit Seitenwänden (42,44) und zwischen den Seitenwänden (42, 44) angeordneten Belägen (48, 50), die mit Öffnungen (54) versehen sind, in denen mindestens eine Verschlusseinrichtung (60) nach einem der Ansprüche 1 bis 9 lösbar befestigt ist.
